(19) **Europäisches Patentamt**

**European Patent Office**

**Office européen des brevets**

(11) **EP 1 416 559 A2**

(12) **EUROPEAN PATENT APPLICATION**

(43) Date of publication:
06.05.2004 Bulletin 2004/19

(51) Int Cl.$^7$: **H01M 8/02**, H01M 8/04

(21) Application number: **03256185.4**

(22) Date of filing: **30.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.10.2002 US 282987**

(71) Applicant: **Hewlett-Packard Development Company, L.P.
Houston, TX 77070 (US)**

(72) Inventors:
• **Herman, Gregory S.
Albany, OR 97321 (US)**

• **Champion, David
Lebanon, OR 97355 (US)**
• **O'Neil, James
Corvallis, OR 97330 (US)**
• **Mardilovich, Peter
Corvallis, OR 97330 (US)**

(74) Representative: **Jackson, Richard Eric et al
Carpmaels & Ransford,
43 Bloomsbury Square
London WC1A 2RA (GB)**

(54) **Fuel cell stack with heat exchanger**

(57) A fuel cell (10, 10', 10") includes a fuel cell stack (12, 12', 12", 40, 40', 42) and a heat exchanger (14, 14', 24, 24') in fluid and thermal communication with the fuel cell stack (12, 12', 12", 40, 40', 42). The heat exchanger (14, 14', 24, 24') is adjacent the fuel cell stack (12, 12', 12", 40, 40', 42) and both removes excess heat from the fuel cell stack (12, 12', 12", 40, 40', 42) and preheats a gas before entry into the fuel cell stack (12, 12', 12", 40, 40', 42).

EP 1 416 559 A2

## Description

BACKGROUND OF THE INVENTION

The present invention relates generally to fuel cells, and more particularly to fuel cell stacks with heat exchangers.

Fuel cells use an electrochemical energy conversion of hydrogen and oxygen into electricity and heat. It is anticipated that fuel cells may be able to replace primary and secondary batteries as a portable power supply. In, for example, solid oxide fuel cells, the oxygen reduction reaction (taking place at the cathode) is:

$$O_2 + 4\,e^- \rightarrow 2O^{2-}.$$

The $O^{2-}$ ion is transferred from the cathode through the electrolyte to the anode. Some typical fuel oxidation reactions (taking place at the anode) are:

$$2H_2 + 2O^{2-} \rightarrow 2H_2O + 4\,e^-$$

$$2CO + 2O^{2-} \rightarrow 2CO_2 + 4\,e^-.$$

The oxidation reaction at the anode, which liberates electrons, in combination with the reduction reaction at the cathode, which consumes electrons, results in a useful electrical voltage and current through the load. Although in PEM fuel cells the mobile ion is the $H^+$ ion, the useful reaction taking place, i.e. the combination of hydrogen and oxygen to form water, is the same.

As such, fuel cells provide a direct current (DC) voltage that may be used to power motors, lights, electrical appliances, etc. A solid oxide fuel cell (SOFC) is a type of fuel cell that may be useful in portable applications. SOFCs generally require somewhat high temperature environments for efficient operation. As such, it is desirable for SOFCs to reach operating temperatures in an efficient and rapid manner.

Some attempts have been made to heat fuel cells to reach operating temperatures more quickly. One such attempt includes use of heat exchangers connected to the heated exhaust streams in order to heat incoming air and fuel, while keeping air, fuel and exhaust separate from each other. Unfortunately, it appears that most of these attempts have resulted in rather inefficient and slow fuel cell systems. Further, these attempts generally render the fuel cell system larger and more complex, yet the added bulk/complexity may only be useful upon start-up of the fuel cell.

SUMMARY OF THE INVENTION

The present invention solves the drawbacks enumerated above by providing a fuel cell which includes a fuel cell stack and a heat exchanger in fluid and thermal communication with the fuel cell stack. The heat exchanger is adjacent the fuel cell stack and both removes excess heat from the fuel cell stack and preheats a gas before entry into the fuel cell stack.

BRIEF DESCRIPTION OF THE DRAWINGS

Objects, features and advantages of embodiments of the present invention may become apparent upon reference to the following detailed description and drawings, in which:

Fig. 1 is a semi-schematic front view of an embodiment of the present invention, showing an embodiment of a single chamber fuel cell stack;
Fig. 2 is a semi-schematic side view of the embodiment of the present invention shown in Fig. 1;
Fig. 3 is a semi-schematic side view of an embodiment of the present invention, showing an embodiment of a dual chamber fuel cell stack;
Fig. 4 is a semi-schematic, cross-sectional front view of the embodiment of the present invention shown in Fig. 3; and
Fig. 5 is a semi-schematic, cross-sectional front view of an embodiment of the present invention, showing an alternate embodiment of a single chamber fuel cell stack.

DETAILED DESCRIPTION OF THE EMBODIMENTS

The present invention is predicated upon the unexpected and fortuitous discovery that performance of a fuel cell may be improved by using heat generated during operation of the fuel cell stack (as opposed to exhaust gas heat) to warm incoming gas (oxidant(s) and/or reactant(s)) to more efficient operating temperatures. This removal of heat from the fuel cell stack advantageously substantially prevents overheating of the fuel cell stack. As such, the deleterious effects of fuel cell stack overheating (for example, cracking or other thermal damage) are substantially avoided.

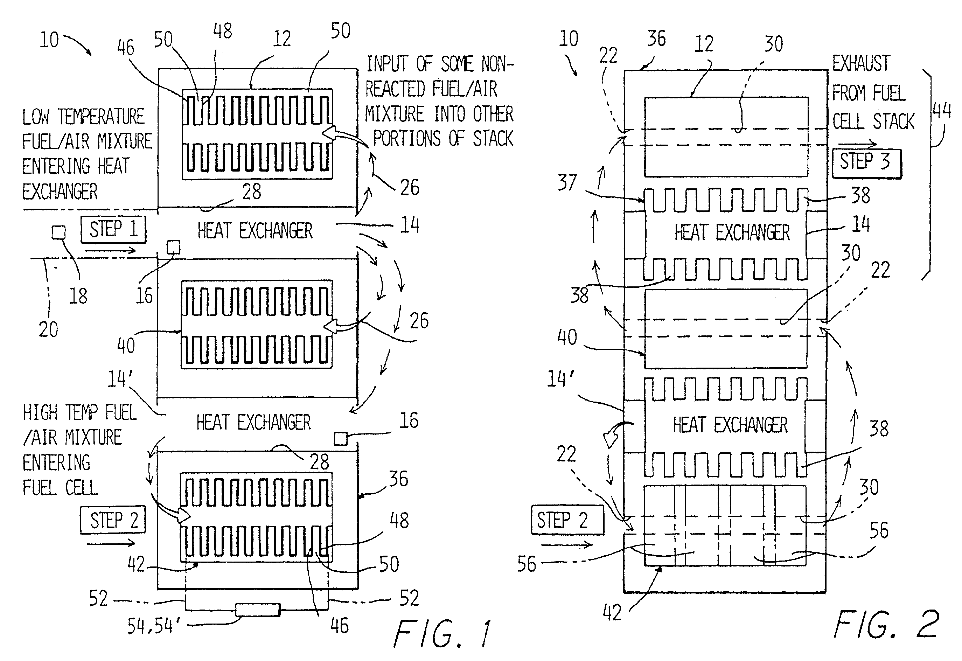

Referring now to Figs. 1, 4 and 5, fuel cells according to embodiments of the present invention are designated generally as 10, 10', 10". Fuel cell 10, 10', 10" comprises a fuel cell stack 12, 12', 12" and a heat exchanger 14, 24' in fluid and thermal communication with the fuel cell stack 12, 12', 12". The heat exchanger 14, 24' is adjacent the fuel cell stack 12, 12', 12" and is adapted to both remove excess heat from the fuel cell stack 12, 12', 12" and preheat a gas before entry into the fuel cell stack 12, 12', 12".

It is to be understood that there may be one or a plurality of fuel cell stacks 12, 12', 12", as desired and/or necessitated by a chosen end use. Further, it is to be understood that each fuel cell stack 12, 12', 12" may comprise any desired number of fuel cell assemblies (anode 46, cathode 48, electrolyte 50). Still further, it is to be understood that there may be one or a plurality of heat exchangers 14, 14', 24, 24', as desired and/or necessitated by a chosen end use.

The fuel cell 10, 10', 10" may optionally comprise a port 16, 16', in fluid communication with the heat exchanger 14, 24' for adding water and/or water vapor to the gas before entry into the fuel cell stack 12, 12', 12".

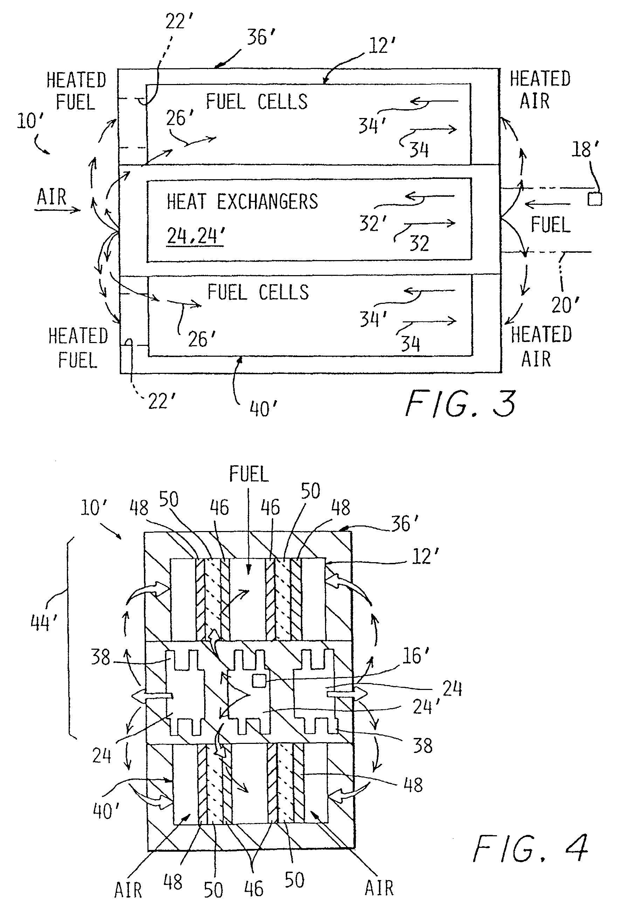

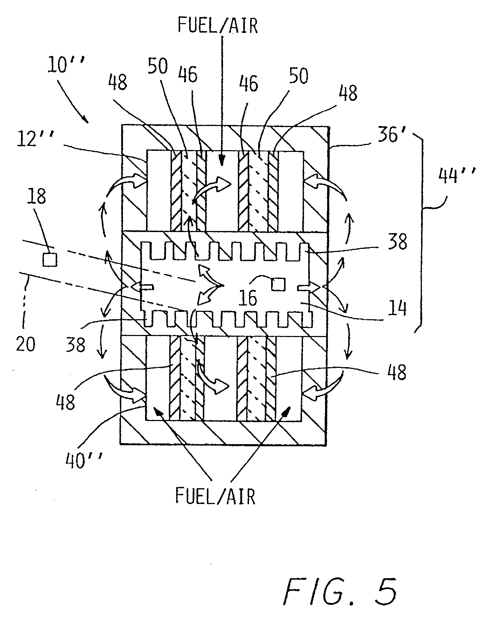

The gas may be carried in a conduit 20 (Figs. 1 and 5), 20' (Fig. 3) to the heat exchanger 14, 24'; however, it is to be understood that the gas may be carried to heat exchanger 14, 24' in many ways. Fuel cell 10, 10', 10", in addition to port 16, 16', or alternate to port 16, 16', may optionally comprise a port 18, 18' in fluid communication with the conduit 20, 20', for adding water and/or water vapor to the gas before entry into the heat exchanger 14, 24'.

Though optional, the addition of water/water vapor to the fuel (in a dual chamber embodiment, Figs. 3 and 4) or to the fuel/air mixture (in a single chamber embodiment, Figs. 1, 2 and 5), may be advantageous in that it allows partial reforming of the fuel before entry into the fuel cell stack 12, 12', 12". This may assist in enhancing the reforming reaction, which may in turn help improve fuel utilization and increase power output. A further advantage gained from the addition of water/water vapor is that the endothermic reforming reaction may aid in cooling certain high temperature portions of the stack 12, 12', 12" eg. near the gas inlet 22 (Fig. 2), 22' (Fig. 3).

The fuel cell 10, 10', 10" may further optionally comprise a manifold, represented schematically by arrows 26, 26', operatively and fluidly connected between the heat exchanger 14, 24' and the fuel cell stack 12, 12', 12" for adding non-reacted/fresh gas in an area downstream from the fuel cell stack inlet 22, 22'. "Downstream" is defined herein as meaning past at least one fuel cell assembly (anode 46/cathode 48/electrolyte 50) from inlet 22, 22'. Without being bound to any theory, it is believed that such routing of non-reacted/fresh gas to later portions of the fuel cell stack 12, 12', 12" may significantly improve performance of the fuel cell 10, 10', 10", in that a depleted fuel stream may result in overpotential losses, where one low performing cell may limit the performance from the entire stack.

The gas comprises reactants and/or oxidants and/or mixtures thereof. In an embodiment, the reactants are fuels, and the oxidants are one of oxygen, air, and mixtures thereof.

It is to be understood that any suitable fuel/reactant may be used with the fuel cell 10, 10', 10" of the present invention. In an embodiment, the fuel/reactant is selected from at least one of methane, ethane, propane, butane, pentane, methanol, ethanol, higher straight chain or mixed hydrocarbons, for example, natural gas or gasoline (low sulfur hydrocarbons may be desirable, eg. low sulfur gasoline, low sulfur kerosene, low sulfur diesel), and mixtures thereof. In an alternate embodiment, the fuel/reactant is selected from the group consisting of butane, propane, methane, pentane, and mixtures thereof. Suitable fuels may be chosen for their suitability for internal and/or direct reformation, suitable vapor pressure within the operating temperature range of interest, and like parameters.

It is to be understood that the fuel cell 10, 10', 10" may be one of solid oxide fuel cells (SOFCs), proton conducting ceramic fuel cells, Polymer Electrolyte Membrane (PEM) fuel cells, molten carbonate fuel cells, solid acid fuel cells, and Direct Methanol PEM fuel cells. In an embodiment of the present invention, the fuel cell 10, 10', 10" is a solid oxide fuel cell. Without being bound to any theory, it is believed that some added advantages may be gained when using a solid oxide fuel cell in conjunction with the present invention. For example, SOFCs generally require a mechanism in which the fuel, air and/or fuel/air mixture are/is brought substantially up to operating temperature; otherwise cooling and/or non-uniform heating of the cell 10, 10', 10" may result in deleterious stress related damage, and in some instances, lower overall performance.

Referring now to Figs. 1 and 2, a heat exchanger gas flow path/passage is schematically shown and designated as 28. A fuel cell stack gas flow path is schematically shown and designated as 30. In a non-limitative embodiment, the heat exchanger gas flow path 28 is substantially orthogonal to the fuel cell stack gas flow path 30. This gas flow arrangement is advantageous in that it allows efficient heat transfer under certain predetermined conditions.

It is to be understood that the gas flow arrangement in embodiments of the present invention may be otherwise, as desired and/or necessitated by a particular end use and/or packaging constraints. For example, as seen in Fig. 3, a heat exchanger oxidant/air flow path is schematically shown and designated as 32. A heat exchanger reactant/fuel flow path is schematically shown and designated as 32'. A fuel cell stack reactant/fuel flow path is schematically shown and designated as 34. A fuel cell stack oxidant/air flow path is schematically shown and designated as 34'. As can be seen, in this embodiment, the gas flow paths 32, 32' and 34, 34' run substantially parallel to each other.

The fuel cell 10, 10', 10" of embodiments of the present invention may further optionally comprise a housing 36, 36' containing the fuel cell stack(s) 12, 12'. In an embodiment, the heat exchanger(s) 14, 14', 24, 24' is/are formed, unitarily or otherwise, from the housing 36, 36'. It is to be understood that housing 36, 36' may be formed in any suitable size, shape and/or configuration, as desired and/or necessitated by a particular end use and/or packaging constraints.

It is to be understood that housing 36, 36' may be formed from any suitable material and by any suitable process. In an embodiment, housing 36, 36' is formed from a high thermal conductivity material. Similarly, it is to be understood that the high thermal conductivity material may comprise any suitable material. However, in an embodiment, the high thermal conductivity material is selected from at least one of stainless steel with low nickel concentrations (for example, HAYNES® Ti-3Al-2.5V alloy, Type 446, and the like), stainless steel, metallic alloys coated with an unreactive layer, aluminum oxide, magnesium oxide, carbon materials, silicon, single crystal silicon, polycrystalline silicon, silicon oxide, alumina, sapphire, ceramic, and mixtures thereof. Some of the metallic alloys include but are not limited to high temperature nickel alloys, eg. some such alloys are commercially available under the tradenames INCONEL 600 and INCONEL 601 from International Nickel Company in Wexford, Pennsylvania, and HASTELLOY X and HA-230 from Haynes International, Inc. in Kokomo, Indiana. Some non-limitative carbon materials include graphite, diamond, and the like.

Fuel cell 10, 10' may further optionally comprise insulation disposed about the housing for substantially preventing undesirable heat loss to the surrounding environment. It is to be understood that this insulation may comprise any suitable material; however, in an embodiment, the insulation is formed from at least one of advanced aerogel insulation, multilayer foil insulation, thermal barrier materials, and mixtures thereof. Aerogels have an extremely fine and highly porous structure, are very light, and may be made from various materials including silica, alumina, titania, hafnium carbide, and a variety of polymers. An example of a suitable aerogel is commercially available under the tradename PYROGEL® from Aspen Systems, Inc. in Marlborough, Massachusetts. PYROGEL is refractory oxide and carbide aerogel insulation useful at temperatures up to about 3000°C.

Any of the heat exchangers 14, 14', 24, 24' disclosed herein may optionally comprise a heat transfer enhancement member 37. It is to be understood that member 37 may comprise any suitable structure and/or material, as desired and/or necessitated by a particular end use. In an embodiment, member 37 is selected from at least one of fins 38, posts, foams, and combinations thereof. Fins 38 extend outwardly from the heat exchanger 14, 14', 24, 24' toward the fuel cell stack 12, 12', 12". The fins 38 are adapted to aid in conductive heat transfer between the fuel cell stack 12, 12', 12" and the heat exchanger 14, 14', 24, 24'.

It may be preferred that the fuel cell stack 12, 12', 12", 40, 40', 42 have a surface area greater than the surface area of the substrate upon which it is built. When the optional housing 36, 36' is used, housing 36, 36' may be the substrate upon which the fuel cell stack 12, 12', 12", 40, 40', 42 is built.

Further, it may be preferred that the heat exchanger 14, 14', 24, 24' have a surface area greater than the surface area of the substrate upon which it is built. When the optional housing 36, 36' is used, housing 36, 36' may be the substrate upon which the heat exchanger 14, 14', 24, 24' is built. In an alternate embodiment, the heat exchanger 14, 14', 24, 24' is the substrate and the fuel cell stack 12, 12', 12", 40, 40', 40", 42 may then be formed upon the heat exchanger-substrate.

Fuel cell 10, 10', 10" may further optionally comprise a second fuel cell stack 40, 40', 40" in fluid and thermal communication with the heat exchanger 14, 24, 24', wherein the second fuel cell stack 40, 40', 40" is adjacent the heat exchanger 14, 24, 24'. The heat exchanger 14, 24, 24' is adapted to both remove excess heat from the second fuel cell stack 40, 40', 40" and preheat a gas before entry into the second fuel cell stack 40, 40', 40" and/or the fuel cell stack 12, 12', 12". In an embodiment, the second fuel cell stack 40, 40', 40" is in fluid communication with fuel cell stack 12, 12', 12".

It is to be understood that in any of the embodiments of the fuel cell 10, 10', 10" discussed herein, although desirable in certain instances, it may not be necessary to have upper fuel cell stacks (eg. 12, 12', 12") in fluid communication with lower fuel cell stacks (eg. 40, 40', 40", 42).

Further, fuel cell 10, 10', 10" may optionally comprise a second heat exchanger 14' in fluid and thermal communication with the second fuel cell stack 40, wherein the second heat exchanger 14' is adjacent the second fuel cell stack 40 and is adapted to both remove excess heat from the second fuel cell stack and preheat a gas before entry into the second fuel cell stack 40 and/or fuel cell stack 12.

In an embodiment of the present invention, fuel cell 10, 10', 10" may further optionally comprise a third fuel cell stack 42 in fluid and thermal communication with the second heat exchanger 14', wherein the third fuel cell stack 42 is adjacent the second heat exchanger 14'. The second heat exchanger 14' is adapted to both remove excess heat from the third fuel cell stack 42 and preheat a gas before entry into the third fuel cell stack 42 and/or the second fuel cell stack 40 and/or fuel cell stack 12. In the embodiment as shown in Figs. 1 and 2, the third fuel cell stack 42 is in fluid communication with the second fuel cell stack 40.

It is to be understood that any number of fuel cell stacks and adjacent heat exchangers may be used as desired and/or necessitated by a particular end use and/or packaging desires and/or requirements. Each fuel cell stack 12, 12', 12", 40, 40', 40", 42 and adjacent heat exchanger 14, 14', 24, 24' comprises one module 44, 44', 44". In an embodiment, the fuel cell 10, 10', 10" may comprise a plurality of operatively connected modules 44, 44', 44" (i.e. a plurality of modules 44 are operatively connected together, and/or a plurality of modules 44' are operatively connected together, and/or a plurality of modules 44" are operatively connected together).

In embodiments shown in Figs. 1, 2 and 5, the fuel cell 10, 10" is a single chamber fuel cell. In one embodiment of a single chamber fuel cell as best seen in Fig. 1, the anodes 46, cathodes 48 and electrolytes 50 are on a single surface. In an alternate embodiment of a single chamber fuel cell as best seen in Fig. 5, the anodes 46 and cathodes 48 are on opposite sides of electrolytes 50. In either single chamber fuel cell embodiment (Figs. 1 and 2 or Fig. 5), the gas is a mixture of reactants and oxidants, eg. a fuel/air mixture.

In an embodiment shown in Figs. 3 and 4, the fuel cell is a dual chamber fuel cell. As shown, each fuel cell stack 12', 40' comprises a plurality of fuel cell assemblies. A total of four such assemblies are shown; however, this is for illustrative purposes only. It is to be understood that, as with any of the stacks 12, 12', 12'', 40, 40', 40'', 42 described herein, there may be any number of fuel cell assemblies so as to produce a desired voltage. As described above, each fuel cell assembly has an anode side 46 connected to one side of an electrolyte 50, and a cathode side 48 connected to the other side of the electrolyte 50.

The heat exchanger comprising part of the module 44' for the dual chamber fuel cell 10' is subdivided into at least two separate heat exchangers, one for carrying reactant/fuel, the other for carrying oxidant/air. In the non-limitative example shown, two heat exchangers 24 carry oxidants/air to the cathode side 48 of each of the plurality of fuel cell assemblies; while one heat exchanger 24' carries reactants/fuel to the anode side 46 of each of the plurality of fuel cell assemblies.

In any of the embodiments disclosed herein, the electrolyte 50 may comprise any suitable material. In an embodiment, electrolyte 50 comprises at least one of oxygen ion conducting membranes, protonic conductors, and mixtures thereof. In a further embodiment, the electrolyte 50 may comprise at least one of cubic fluorite structures, doped cubic fluorites, proton-exchange polymers, proton-exchange ceramics, and mixtures thereof. In yet a further embodiment, the cubic/doped cubic fluorite structures may comprise at least one of 8 mole% yttria-stabilized zirconia (YSZ), 20 mole% samarium doped-ceria, Gd - doped $CeO_2$, $La_{0.9}Sr_{0.1}Ga_{0.8}Mg_{0.2}O_3$, and mixtures thereof. Electrolyte 50 may also comprise doped perovskite oxides such as $La_{0.9}Sr_{0.1}Ga_{0.8}Mg_{0.2}O_3$, proton conducting perovskites such as $BaZrO_3$, $SrCeO_3$, and $BaCeO_3$, other proton exchange ceramics, ion exchange polymers such as NAFION[TM] (commercially available from E.I. du Pont de Nemours and Company), and mixtures thereof.

Further, in any of the embodiments disclosed herein, the anode 46 may comprise any suitable material. In an embodiment, anode 46 comprises at least one of metals, cermets, and doped cerias. In a further embodiment, the metals may comprise one of silver, nickel, and mixtures thereof; the cermets may comprise one of Ni-YSZ, and Cu-YSZ, and mixtures thereof, and the doped cerias may comprise one of Ni or Cu doped $Ce_{0.8}Sm_{0.2}O_{1.9}$, Ni or Cu doped $Ce_{0.9}Gd_{0.1}O_{1.9}$, and mixtures thereof.

Yet further, in any of the embodiments disclosed herein, the cathode 48 may comprise any suitable material. In an embodiment, cathode 48 comprises at least one of metals, and doped perovskites. In a further embodiment, the metals comprise one of silver, nickel, and mixtures thereof; the doped perovskites comprise $Sm_{0.5}Sr_{0.5}CoO_3$, $Ba_{0.8}La_{0.2}CoO_3$, $Gd_{0.5}Sr_{0.5}CoO_3$, Fe or Mn doped $Sm_{0.5}Sr_{0.5}CoO_3$, Fe or Mn doped $Ba_{0.8}La_{0.2}CoO_3$, Fe or Mn doped $Gd_{0.5}Sr_{0.5}CoO_3$, and mixtures thereof.

The electrolyte 50, cathode 48, and anode 46 may be porous or dense. As used herein, a dense material has at least about 80% of its theoretical density.

In an embodiment of the present invention comprising a single chamber solid oxide fuel cell, the fuel cell stack 12, 12'' operates at a temperature ranging between about 50°C and about 1000°C. In an alternate embodiment thereof, the fuel cell stack 12, 12' operates at a temperature ranging between about 200°C and about 700°C. In yet a further alternate embodiment thereof, the fuel cell stack 12, 12' operates at a temperature ranging between about 300°C and about 500°C.

In an embodiment of the present invention comprising an alkaline fuel cell, the fuel cell stack operates at a temperature ranging between about 50°C and about 200°C. In an embodiment of the present invention comprising a PEM fuel cell, the fuel cell stack operates at a temperature ranging between about 50°C and about 100°C. In an embodiment of the present invention comprising a phosphoric acid fuel cell, the fuel cell stack operates at a temperature of about 220°C. In an embodiment of the present invention comprising a molten carbonate fuel cell, the fuel cell stack operates at a temperature of about 650°C.

In an embodiment of the present invention, the gas before entry into the heat exchanger 14, 24, 24' is at a temperature ranging between about 50% and about 99% of the fuel cell stack operating temperature. In a further embodiment, the gas before entry into the heat exchanger 14, 24, 24' is at a temperature about 75% of the fuel cell stack operating temperature.

The fuel cell 10, 10', 10'' of embodiments of the present invention may have power densities ranging between about 0.5 $W/cm^2$ and about 1 $W/cm^2$. In an embodiment of the present invention, the fuel cell 10, 10', 10'' ranges in size between about 1 $cm^2$ and about 100,000 $cm^2$, and has a power output ranging between about 0.5 W and about 100 kW. In an alternate embodiment of the present invention, the fuel cell 10, 10', 10'' ranges in size between about 10 $cm^2$ and about 5,000 $cm^2$, and has a power output ranging between about 10 W and about 5 kW.

The fuel cell 10, 10', 10'' may further comprise a connection 52 (shown schematically in Fig. 1) between the fuel cell 10, 10', 10'' and an electrical load 54 and/or an electrical storage device 54'. In an embodiment, the connection 52 has as a main component thereof a material selected from at least one of silver, palladium, platinum, gold, titanium, tantalum, chromium, iron, nickel, carbon, and mixtures thereof.

The electrical load 54 may comprise many devices, including but not limited to any or all of computers, portable electronic appliances (eg. portable digital assistants (PDAs), portable power tools, etc.), and communication devices, portable or otherwise, both consumer and military. The electrical storage device 54' may comprise, as non-limitative examples, any or all of capacitors, batteries, and power conditioning devices. Some exemplary power conditioning devices include uninterruptable power supplies, DC/AC converters, DC voltage converters, voltage regulators, current limiters, etc. It is also contemplated that the fuel cell 10, 10', 10" of the present invention may in some instances be suitable for use in the transportation industry, eg. to power automobiles, and in the utilities industry, eg. within power plants.

In a further embodiment of the fuel cell 10, 10', 10" of the present invention, the fuel cell stack 12, 12', 12", 40, 40', 40", 42 may optionally comprise a sub-assembly that may contain at least two sub-stacks 56, as shown in phantom in Fig. 2.

Referring again to Figs. 1 and 2, which depict a non-limitative, illustrative embodiment, gas (between about 50% and 99% of the fuel cell stack operating temperature) enters heat exchanger 14 at "Step 1." The gas may be warmed in heat exchanger 14, then a majority of that gas continues to heat exchanger 14', although smaller portions of that gas may be sent directly to portions of fuel cell stacks 12, 40 downstream from inlet 22. The gas may be further warmed in heat exchanger 14', after which, at "Step 2," it is sent through inlet 22 of fuel cell stack 42. The gas partially reacts in fuel cell stack 42, then travels through fuel cell stack 40 and reacts further, then finally travels through fuel cell stack 12 until it is exhausted from fuel cell stack 12 at "Step 3." Without being bound to any theory, it is believed that, due to the close proximity of heat exchangers 14, 14' to fuel cell stacks 12, 40, 42, and the high surface area of the fuel cell stacks 12, 40, 42 and heat exchangers 14, 14', efficient conductive heat transfer occurs from the fuel cell stacks 12, 40, 42 to the heat exchangers 14, 14', thus allowing excess operating fuel cell heat to pre-warm incoming gas to more efficient operating temperatures.

A method of improving efficiency of a fuel cell 10, 10', 10" according to an embodiment of the present invention comprises the step of removing heat from a fuel cell stack 12, 12', 12", 40, 40', 40", 42 and using the heat to warm a gas before entry into the fuel cell stack 12, 12', 12", 40, 40', 40", 42.

In an embodiment of the present invention, the removing and using step may be accomplished by passing the gas at a first temperature (as stated above, gas before entry into the heat exchanger ranges between about 50% and about 99% of the fuel cell stack operating temperature) through a heat exchanger 14, 14', 24, 24' thermally connected to the fuel cell stack, wherein gas exiting the heat exchanger 14, 14', 24, 24' is at a second temperature higher than the first temperature. Gas at the second temperature may be passed through the fuel cell stack 12, 12', 12", 40, 40', 40", 42. Excess heat may be removed from the fuel cell stack 12, 12', 12", 40, 40', 40", 42 via the heat exchanger 14, 14', 24, 24'.

An alternate embodiment of the method of the present invention may further optionally comprise the step of adding water or water vapor to the gas before entry into the fuel cell stack 12, 12', 12", 40, 40', 40", 42. Alternately or additionally, the alternate embodiment of the method of the present invention may further optionally comprise the step of adding water or water vapor to the gas before entry into the heat exchanger 14, 14', 24, 24'.

An embodiment of the method of the present invention may further optionally comprise the step of adding non-reacted gas in an area downstream from the fuel cell stack inlet 22, 22'.

A further embodiment of the method of the present invention may further optionally comprise the step of insulating the fuel cell stack 12, 12', 12", 40, 40', 40", 42 and the heat exchanger 14, 14', 24, 24' to substantially prevent undesirable heat loss to the surrounding environment.

Yet a further embodiment of the method of the present invention optionally comprises the step of preheating the gas before entry into the heat exchanger 14, 14', 24, 24'. For example, at "Step 1" as depicted in Fig. 1, the low temperature gas (for example, a fuel/air mixture) may be at ambient temperature, or it may be preheated for potentially even further efficient operation of fuel cell 10, 10', 10".

A method of making a fuel cell 10, 10', 10" according to an embodiment of the present invention comprises the step of thermally and fluidly attaching a fuel cell stack 12, 12', 12", 40, 40', 40", 42 to a heat exchanger 14, 14', 24, 24', wherein the heat exchanger 14, 14', 24, 24' both removes excess heat from the fuel cell stack 12, 12', 12", 40, 40', 40", 42 and preheats a gas before entry into the fuel cell stack 12, 12', 12", 40, 40', 40", 42.

In an embodiment of the present invention, the fuel cell stack 12, 12', 12", 40, 40', 40", 42 and heat exchanger 14, 14', 24, 24' are formed by at least one of micromachining processing and semiconductor processing. Some examples of such processing include, but are not limited to deposition, patterning, etching, and the like.

The combination of the heat exchanger 14, 24' and fuel cell stack 12, 12' advantageously reduces the total size of the system 10, 10'. In addition to the reduction in size, use of high surface area fuel cell stacks 12, 12' and heat exchangers 14, 24' allows efficient heat transfer between the fuel cell stack 12, 12' and the heat exchanger 14, 24'. Another advantage is that the fuel cell 10, 10' may be manufactured using micromachining/semiconductor processing.

Further, it is not necessary, or even desirable for good performance of the fuel cell 10, 10", to have leak tight separation between air, fuel and exhaust in embodiments of the present invention relating to single-chamber fuel cells. When mixing fuel, air and/or exhaust, it may be desirable to keep the dimensions in the fuel cell stack below the critical length required for propagation of a flame; eg. for hydrocarbons, a flame generally needs to be at least about 1-3 mm in size to exist at room temperature. Optionally or additionally, it may be desirable to adjust the air-fuel mixture so as to run with excess (above the upper flammability limit) fuel (for example, the upper flammability limit for propane is 9.6%); and then to add more air when the oxygen is consumed later in the stack. It may be desirable to add air at several locations in the stack. Alternately to running with excess fuel, it may be desirable to adjust the air-fuel mixture so as to run with excess (below the lower flammability limit) air (for example, the lower flammability limit for propane is 2.2%); and then to add more fuel when the fuel is consumed later in the stack. It may be desirable to add fuel at several locations in the stack. It is believed apparent that a mixture of multiple flammable gases will have a different flammability limit than the flammability limit of the gases individually. Thus, if for example, carbon monoxide (as a reaction product) is combined with propane (as a fuel) later in the cell, the lower flammability limit of the mixture is 3.3%, while the upper limit is 10.9% according to Le Châtelier's Principle.

Yet another advantage is found in the optional addition of water/water vapor to the fuel and/or fuel/air mixture which may enhance the fuel reforming reaction, increase power output, and assist in reducing the temperature in the fuel cell stack 12, 12'.

While several embodiments of the invention have been described in detail, it will be apparent to those skilled in the art that the disclosed embodiments may be modified. Therefore, the foregoing description is to be considered exemplary rather than limiting, and the true scope of the invention is that defined in the following claims.

## Claims

1. A fuel cell (10, 10', 10"), comprising:

   at least one fuel cell stack (12, 12', 12"); and at least one heat exchanger (14, 24') in fluid and thermal communication with the at least one fuel cell stack (12, 12', 12");, wherein the at least one heat exchanger (14, 24') is adjacent the at least one fuel cell stack (12, 12', 12") and is adapted to both remove excess heat from the at least one fuel cell stack (12, 12', 12") and preheat a gas before entry into the at least one fuel cell stack (12, 12', 12").

2. The fuel cell (10, 10', 10") as defined in claim 1 wherein the gas is carried in a conduit (20, 20') to the at least one heat exchanger (14, 24'), the fuel cell (10, 10', 10") further comprising a port (16, 16', 18, 18'), in fluid communication with the at least one heat exchanger (14, 24') or in fluid communication with the conduit (20, 20'), for adding at least one of water, water vapor, and mixtures thereof to the gas before entry into the at least one fuel cell stack (12, 12', 12") or before entry into the at least one heat exchanger (14, 24').

3. The fuel cell (10, 10', 10") as defined in any of claims 1 to 2 wherein the at least one fuel cell stack (12, 12', 12") has an inlet (22, 22'), the fuel cell (10, 10', 10") further comprising a manifold (26, 26'), operatively and fluidly connected between the at least one heat exchanger (14, 24') and the at least one fuel cell stack (12, 12', 12"), for adding non-reacted gas in an area downstream from the fuel cell stack inlet (22, 22').

4. The fuel cell (10, 10', 10") as defined in any of claims 1 to 3 wherein the fuel cell (10, 10', 10") is one of solid oxide fuel cells, proton conducting ceramic fuel cells, Polymer Electrolyte Membrane (PEM) fuel cells, molten carbonate fuel cells, solid acid fuel cells, and Direct Methanol PEM fuel cells.

5. The fuel cell (10, 10', 10") as defined in any of claims 1 to 4, further comprising a heat exchanger gas flow path (28) and a fuel cell stack gas flow path (30), wherein the heat exchanger gas flow path (28) is substantially orthogonal to the fuel cell stack gas flow path (30).

6. The fuel cell (10, 10', 10") as defined in any of claims 1 to 5, further comprising a housing (36, 36') containing the at least one fuel cell stack (12, 12', 12", 40, 40', 42), wherein the at least one heat exchanger (14, 14', 24, 24') is formed from the housing (36, 36'), wherein the housing (36, 36') is formed from a high thermal conductivity material.

7. A method of improving efficiency of a fuel cell (10, 10', 10"), comprising the step of:

   removing heat from a fuel cell stack (12, 12', 12") and using the heat to warm a gas before entry into the fuel cell stack (12, 12', 12"), wherein the removing and using step is accomplished by:

      passing the gas at a first temperature through a heat exchanger (14, 14', 24') thermally connected to the fuel cell stack, wherein gas exiting the heat exchanger (14, 14', 24') is at a second temperature higher than the first temperature; passing gas at the second temperature through the fuel cell stack (12, 12', 12"); and

removing excess heat from the fuel cell stack (12, 12', 12") via the heat exchanger (14, 14', 24').

8. The method as defined in claim 7 wherein the fuel cell stack (12, 12', 12") has an inlet (22, 22'), the method further comprising the steps of:

adding at least one of water, water vapor, and mixtures thereof to the gas before entry into the fuel cell stack (12, 12', 12") or before entry into the heat exchanger (14, 14', 24');
adding non-reacted gas in an area downstream from the fuel cell stack inlet (22, 22'); and
insulating the fuel cell stack (12, 12', 12") and the heat exchanger (14, 14', 24') to substantially prevent undesirable heat loss to the surrounding environment.

9. The method as defined in any of claims 7 to 8 wherein the fuel cell is a single chamber solid oxide fuel cell.

10. A method of making a fuel cell (10, 10', 10"), comprising the step of:

thermally and fluidly attaching a fuel cell stack (12, 12', 12") to a heat exchanger (14, 14', 24'), wherein the heat exchanger (14, 14', 24') both removes excess heat from the fuel cell stack (12, 12', 12") and preheats a gas before entry into the fuel cell stack (12, 12', 12");

wherein the fuel cell stack (12, 12', 12") and heat exchanger (14, 14', 24') are formed by at least one of micromachining processing and semiconductor processing;
and wherein the fuel cell (10, 10', 10") has a power density ranging between about 0.5 W/cm$^2$ and about 1 W/cm$^2$, and wherein the fuel cell (10, 10', 10") ranges in size between about 1 cm$^2$ and about 100,000 cm$^2$.

LOW TEMPERATURE
FUEL/AIR MIXTURE
ENTERING HEAT
EXCHANGER

INPUT OF SOME NON-
REACTED FUEL/AIR
MIXTURE INTO OTHER
PORTIONS OF STACK

STEP 1

HEAT EXCHANGER

HIGH TEMP FUEL
/AIR MIXTURE
ENTERING
FUEL CELL

STEP 2

HEAT EXCHANGER

STEP 2

*FIG. 1*

EXHAUST
FROM FUEL
CELL STACK

STEP 3

HEAT EXCHANGER

HEAT EXCHANGER

STEP 2

*FIG. 2*

EP 1 416 559 A2

FIG. 3

FIG. 4

FIG. 5